# EUROPÄISCHE PATENTSCHRIFT

(11) **EP 1 637 269 B1**
(45) Veröffentlichungstag und Bekanntmachung des Hinweises auf die Patenterteilung: **18.04.2012**
(21) Anmeldenummer: 05018972.9
(22) Anmeldetag: 01.09.2005
(51) Int. Cl.: B23K 11/26, F16C 33/12, F16C 33/14, F04B 1/12, F01B 3/00, C22C 9/02, C23C 4/12

(54) **Gleitkörper und Verfahren zur Herstellung eines Gleitkörpers sowie dessen Verwendung**
Sliding body and method of manufacturing a sliding body and its use
Corps lisse et procédé de fabrication d'un corps lisse et son utilisation

(30) Priorität: 15.09.2004 DE 102004044519
(43) Veröffentlichungstag der Anmeldung: 22.03.2006
(73) Patentinhaber: Wieland-Werke AG, 89070 Ulm (DE)
(72) Erfinder: Scharf, Michael, 89165 Dietenheim (DE); Müller, Hilmar, Dr., 89287 Bellenberg (DE); Ohla, Klaus, Dr., 89171 Illerkirchberg (DE)

(56) Entgegenhaltungen:
- EP-A- 1 403 514
- EP-A1- 0 926 251
- DE-U1- 9 320 666

## Beschreibung

Die Erfindung betrifft einen Gleitkörper, bestehend aus einem Grundkörper und einer auf dem Grundkörper angeordneten Gleitsohle mit einer Lauffläche und die Verwendung des Gleitkörpers.

Die Kraftübertragung vom Dieselmotor zu den Rädern und Arbeitseinrichtungen erfolgt bei Erdbewegungsmaschinen, beispielsweise Bagger oder Krane, durch so genannte hydrostatische Antriebe. Bei den oft als Antrieb eingesetzten Schrägscheibenpumpen wird das Drehmoment der Kurbelwelle über eine schräge Scheibe mit variablem Anstellwinkel auf hin und her bewegliche Kolben übertragen. Die Kolben sitzen in einem rotierenden Zylindergehäuse. Eine gleitende Verbindung zur feststehenden Schrägscheibe mittels Gleitschuh bewirkt eine Hin- und Herbewegung der Kolben bei jeder Umdrehung. Der Hub ist durch den jeweiligen Anstellwinkel der Schrägscheibe bestimmt. Die so angetriebenen Kolben sorgen für einen Druckaufbau in Öldruckleitungen, über die wiederum ein hydraulischer Motor angetrieben werden kann.

Während der Dieselmotor in der Regel im Nennlastbetrieb arbeitet, kann der übertragene Druck durch Schräganstellung der Scheibe und den damit veränderten Hubbewegungen der Kolben stufenlos in gewissen Grenzen variiert werden.

Bei Antrieben ist die Steigerung der Leistungsdichte von prinzipiellem Interesse. Damit steigen auch die Anforderungen an die Gleitschuhe bezüglich Festigkeit und Notlaufeigenschaften, weil die Leistung bei höheren Drehzahlen und höheren Drücken aufgebracht werden muss. Die Erhöhung der Drücke verstärkt die spezifische Belastung und beansprucht als Folge die Gleitflächen stärker. Auf Grund der durch höhere Drehzahlen verbundenen Erhöhung der Fliehkräfte müssen alle rotierenden Komponenten leichter ausgeführt werden. Dies kann beispielsweise durch eine minimierte Bauteilgröße erreicht werden.

Die an eine Erhöhung der Belastbarkeit gestellten Anforderungen an den Gleitschuh werden in erster Linie durch Werkstoffe wie beschichteter Stahl aber auch durch einige Sondermessinge erfüllt. In der Praxis findet man häufig entweder Gleitschuhe aus Stahl, auf die eine hochbleihaltige Bronze auf die Lauffläche aufgegossen wird oder Gleitschuhe, die komplett aus Sondermessingen bestehen.

Stahlgleitschuhe weisen, je nach Sorte, hohe Festigkeiten auf. Sie stellen ein bevorzugtes Material des Grundkörpers dar. Die schlechten tribologischen Eigenschaften können durch das Aufgießen hochbleihaltiger Gussbronzen auf die Lauffläche bereits verbessert werden. Nachteilig ist dabei die durch den Aufgießprozess entstandene Gussstruktur mit einer geringen Festigkeit der Gleitschicht.

Entsprechende Gleitschuhe sind beispielsweise in der Druckschrift GB 1 355 325 beschrieben. In der Schrift offenbart ist eine Axialkolbenpumpe bzw. -motor, die einen Gleitschuh mit reibungsvermindernden Schichten an den Berührungsflächen zwischen Gleitschuh und Kugel des Gelenks umfasst. Diese reibungsverminderten Schichten werden metallisch mit dem Gleitschuh verbunden, beispielsweise durch Reibschweißen, Plattieren oder mittels Pulvermetallurgie. Gegebenenfalls werden auch Zwischenschichten aus Molybdän verwendet.

Des Weiteren sind Gleitschuhe für hydrostatische Kolbenmaschinen aus der Druckschrift OS 2 025 169 bekannt, die gegenüber größeren Temperaturschwankungen im Betrieb bei guten Gleiteigenschaften unempfindlicher sein sollen. Dazu wird auf einer bezüglich der Gleitsohle gegenüber liegenden Fläche eines Gleitschuhs eine Schicht mit demselben Werkstoff wie die Gleitsohle fest angeordnet, so dass aufgrund entsprechender Anordnung der Werkstoffe mit unterschiedlichen Ausdehnungskoeffizienten eine sonst auftretende nachteilige Aufwölbung der Gleitsohle weitgehend vermieden werden kann.

Zudem ist aus der Druckschrift EP 1 403 514 A2 ein Gleitschuh für eine hydraulische Maschine bekannt, dessen Lauffläche über Schweißverfahren zu einem Werkstoffverbund stoffschlüssig miteinander verbunden werden.

Auch sind bereits aus der EP 0 926 251 A1 Legierungen auf der Basis von Kupfer-Zinn-Titan bekannt, die als Vollmaterial für Gleitlager eingesetzt werden.

Der Erfindung liegt die Aufgabe zugrunde, einen Gleitkörper anzugeben, der über einen Werkstoffverbund verbesserte tribologische und mechanische Eigenschaften aufweist.

Die Erfindung wird bezüglich eines Gleitkörpers durch die Merkmale des Anspruchs 1 sowie die Verwendung des Gleitkörpers durch die Merkmale des Anspruchs 5 wiedergegeben. Die weiteren rückbezogenen Ansprüche betreffen vorteilhafte Aus- und Weiterbildungen der Erfindung.

Die Erfindung schließt auch bezüglich eines Verfahrens zur Herstellung eines Gleitkörpers, bestehend aus einem Grundkörper und einer auf dem Grundkörper angeordneten Gleitsohle mit einer Lauffläche, die technische Lehre ein, durch die die Gleitsohle und der Grundkörper mittels Kondensatorentladungsschweißen miteinander verbunden werden.

Dem Fügeverfahren zum Verbinden der Gleitsohle mit dem Grundkörper kommt besondere Bedeutung zu. Die Gefügestruktur sollte im Verbindungsbereich zwischen der Lauffläche aus der vorgeschlagenen Zinnbronze und dem Grundkörper aus Stahl möglichst wenig gestört werden.

Die Erfindung geht dabei von der Überlegung aus, dass sich bei diesem Fügeverfahren eine lokal eng begrenzte Wärmeeinflusszone von wenigen Mikrometern ausbildet. Zum Schweißen wird nur so viel Energie an die Fügestelle gebracht, wie notwendig. Die umgebende Matrix bleibt unbeeinflusst und es kommt zu keinem Härteabfall durch zu hohe Temperaturen beim Fügen. Durch die geringe Wärmeeinbringung bilden sich ein günstiges Schweißgutgefüge und eine schmale Wärmeeinflusszone aus. Die Wärmeeinflusszone wird dabei insbesondere durch eine extrem kurze Fügezeit im Bereich von ungefähr 10 ms und einem hohen Stromfluss von bis zu 500 kA begrenzt. Für die geringe Wärmemenge ist üblicherweise keine Elektrodenkühlung notwendig.

Der besondere Vorteil besteht darin, dass durch die extrem kurze Fügezeit es zu keiner nennenswerten Gefügeveränderung oder Oxidation kommt. Im Schliff erkennt man im Fügebereich keine Risse oder Poren. Mit dieser Fügeverbindung können auch mechanische Kräfte gezielt von der Gleitsohle auf den Grundkörper übertragen werden und dabei zudem das unterschiedliche thermische Ausdehnungsverhalten der verwendeten Materialien Beachtung finden.

Es werden die Gleitsohle und der Grundkörper lokal miteinander verbunden. Bei einer derartigen Verbindung kann der zur Erwärmung beitragende Stromfluss entsprechend gezielt gesteuert werden.

Eine der beiden Fügeflächen, die in der Regel aus Material mit höherer Festigkeit und geringerer Leitfähigkeit, in diesem Fall aus Stahl, bestehen, wird konstruktiv derart ausgelegt, dass im Berührungsbereich ein oder mehrere Erhebungen angeordnet sind. Die Erhebungen, im Fachjargon "Buckel" genannt, können als rundum verlaufender Ringbuckel ausgebildet sein, der die Kontaktfläche auf ein Minimum reduziert. Die Schweißenergie und der Schweißdruck sind beim Kondensatorentladungsschweißen die wichtigsten Einstellparameter. Diese Parameter werden dem zu verschweißenden Bauteil angepasst. Beim Schweißvorgang wird eine Kondensatorbatterie auf die für den Schweißvorgang vorgesehene Energie mit konstantem Strom geladen. Eine Schweißpresse fährt Elektroden auf das Bauteil und baut den eingestellten Schweißdruck auf. Daraufhin werden die Kondensatoren entladen, wodurch über die Fügepartner der Schweißstrom fließt. Dabei werden die Buckel durch den Stromdurchgang bei Berührung mit dem Fügepartner aufgeschmolzen und durch den Belastungsdruck mit diesem verbunden. Der Fügevorgang wird abgebrochen, bevor beide Fügeflächen komplett aufeinander treffen. Dadurch entsteht ein Spalt oder auch Hohlraum zwischen den Fügeteilen. Übermäßige Schmelze kann durch konstruktiv eingebrachte Auffangtaschen aufgenommen werden.

Vorteilhafterweise werden die Gleitsohle und der Grundkörper über einen im äußeren Randbereich umlaufenden Ringbuckel alleine oder mit einem mittig angeordneten Ringbuckel miteinander verbunden. Besonders bevorzugt ist eine Verbindung von einem im äußeren Randbereich umlaufenden Ringbuckel in Verbindung mit einem mittig angeordneten Ringbuckel. Hierdurch wird im Betrieb die auf die Lauffläche einwirkende Kraft gezielt auf den stützenden Grundkörper übertragen. Damit kann auch dem unterschiedlichen Ausdehnungsverhalten der verschiedenen Werkstoffe Rechnung getragen werden. Durch weitere, auf das jeweilige Ausdehnungsverhalten bei Erwärmung angepasste Buckel, kann das im Stand der Technik beschriebene Aufwölben der Randbereiche sogar vermindert werden.

Ein weiterer Aspekt der Erfindung schließt bezüglich eines Gleitkörpers die technische Lehre ein, dass der Gleitkörper einen Grundkörper und eine auf dem Grundkörper angeordnete Gleitsohle mit einer Lauffläche aufweist, wobei die Gleitsohle aus einem NE-Metall-Gleitlagerwerkstoff besteht. Als NE-Metall-Gleitlagerwerkstoffe kommen insbesondere Kupferbasislegierungen zum Einsatz.

Bevorzugt besteht der NE-Metall-Gleitlagerwerkstoff aus einer Kupfer-Zinn-Titanlegierung aus 13,5 bis 20 Gew.-% Zinn, 0,05 bis 0,5 Gew.-% Titan, Rest Kupfer und wahlweise aus einem oder mehreren der Elemente aus der Gruppe Silicium, Chrom und Zirkon bis zu einem Gesamtgehalt von 1,0 Gew.-% und unvermeidbaren Verunreinigungen.

Die Erfindung geht dabei von der Überlegung aus, dass sich für Gleitkörper in ihrer Zusammensetzung optimierte Zinnbronzen eignen, wodurch die Gleitkörper einer höheren Belastung unter Einsatzbedingungen standhalten. Makroskopische Seigerungen, wie sie bei konventionellen Gießverfahren bereits ab 6 Gew.-% Zinngehalt auftreten, werden bis zur Löslichkeitsgrenze von Zinn in Kupfer bei 13,5 Gew.-% Sn praktisch nicht beobachtet. Erst bei Überschreitung der angegebenen Löslichkeitsgrenze können sich die für tribologische Anwendungen gewünschten Zweitphasen bilden. Dabei kann insbesondere bei höheren Zinngehalten auch ein höherer Titangehalt in der Legierung enthalten sein.

Bei der zweiten Phase handelt es sich um eine Deltaphase mit einem Zinngehalt von ca. 25 Gew.-%, die extrem hart ist. Der Aufbau der Grundmatrix besteht aus Kupfer und einem in Kupfer gelösten Zinn bis zu einem maximal löslichen Gehalt von ca. 13,5 Gew.-%.

Eine optionale Zugabe der Elemente Chrom, Silizium und Zirkon bewirkt bei der Weiterverarbeitung in Umformvorgängen eine Kornfeinung der Legierung.

Die Fertigung des Laufflächenmaterials in Rundscheiben mit ungefähr 5 mm Dicke folgt in konventioneller Halbzeugfertigung. Zur Weiterverarbeitung wird das Material warmgepresst, wobei der Stangendurchmesser, je nach anschließendem Grad der Kaltverformung, bereits endabmessungsnah gewählt werden kann. Durch den Kaltverformungsprozess können unterschiedliche Zustände sicher und reproduzierbar eingestellt werden.

Ein Extrusionsprozess und die anschließende Kaltverformung sorgen dafür, dass die Deltaphasenausscheidungen in Verformungsrichtung ausgerichtet werden.

Als Alternative bietet sich die Herstellung eines Bandes an. Durch Abstimmung der Fertigungsparameter lassen sich auch hier verschiedene Werkstoffzustände einstellen. Die benötigten Rundscheiben können abschließend aus dem Fertigband gestanzt werden.

Je nach Fertigungsweg über eine Pressstange oder ein gewalztes Band unterscheiden sich die Gefügestrukturen. Während bei gepressten Stangen die Ausscheidungen senkrecht zur Lauffläche angeordnet sind, liegen diese im gewalzten Zustand waagrecht zur Oberfläche. Durch Abrieb der weicheren Grundmatrix bildet sich ein Netzwerk von Hohlräumen, die einen sicheren Schmiermitteltransport gewährleisten.

Der Grundkörper kann aus einer Stahllegierung bestehen. Der Gleitkörper wird demnach aus einem Werkstoffverbund gebildet, der bezüglich seiner Gleiteigenschaften und bezüglich seiner Standfestigkeit im Einsatz aus völlig unterschiedlichen Werkstoffen aufgebaut ist. Dem Fügeverfahren zum Herstellen des Werkstoffverbundes kommt dabei besondere Bedeutung zu. Der Stahlgrundkörper dient zur Aufnahme der im Betrieb an der Lauffläche entstehenden Kräfte.

Die mit der Erfindung erzielten Vorteile bestehen insbesondere darin, dass ein hochfester Stahlgrundkörper mit einem nach tribologischen Gesichtspunkten optimierten bleifreien Kupferwerkstoff vereint zum Einsatz kommt. Damit stehen Gleitkörper mit ausgezeichneten tribologischen und mechanischen Eigenschaften auch bei ansteigender Leistungsdichte für ein breites Anwendungsspektrum zur Verfügung.

Die Kupfer-Zinn-Titanlegierung des Gleitkörpers enthält 13.5 bis 17,0 Gew.-% Zinn . Hierdurch wird die Löslichkeitsgrenze für Zinn bereits überschritten, wodurch sich die gewünschten Zweitphasen ausbilden können. Dieser enger gewählte Elementgehalt eröffnet für Zinn ein ausreichendes und in seinen Parametern variables Prozessfenster für eine bezüglich ihrer Materialeigenschaften reproduzierbare und qualitativ hochwertige Legierung.

Die Kupfer-Zinn-Titanlegierung des Gleitkörpers enthält 0,1 bis 0,3 Gew.-% Titan. Ein Titanzusatz bedingt eine Steigerung der Dichte der Legierung. Titan ist dabei in der Lage Nitride auszubilden, wodurch der im Herstellungsprozess des Sprühkompaktierens als Sprühgas verwendete Stickstoff als Titannitrid abgebunden werden kann. Anteile über 0,3 Gew.-% führen in der derzeitigen Praxis zu keiner weiteren Verbesserung der Legierungseigenschaften.

In bevorzugter Ausführungsform der Erfindung kann die Lauffläche des Gleitkörpers ein gerichtetes zweiphasiges Gefüge aus der Kupfer-Zinn-Titanlegierung aufweisen.

Die gesamte Gleitsohle des Gleitkörpers mit der Lauffläche besteht aus der Kupfer-Zinn-Titanlegierung. Derartige Gleitsohlen erfüllen durch ihre bevorzugten Gleiteigenschaften in Verbindung mit entsprechenden mechanischen Eigenschaften beide Erfordernisse bezüglich tribologischer und mechanischer Erfordernisse in einem.

In bevorzugter Ausführungsform kann der Grundkörper aus einer Stahllegierung bestehen. Hierdurch werden entsprechend hohe Festigkeiten bereits im Grundkörper gewährleistet.

In weiterer vorteilhafter Ausgestaltung der Erfindung kann die Gleitsohle mit dem Grundkörper über einen äußeren Ringbuckel und/oder einem mittig angeordneten Ringbuckel miteinander verbunden sein. Dabei stellt sich beim Kondensatorentladungsschweißens eine zuverlässige Verbindung von Grundkörper und Gleitsohle mit geringer Wärmeeinwirkung im Herstellungsprozess an den Fügeflächen ein.

Derartige erfindungsgemäße Gleitkörper können als Gleitschuh für hydrostaische Kolbenmaschinen Verwendung finden.

Ausführungsbeispiele der Erfindung werden anhand einer schematischen Zeichnung näher erläutert.

Darin zeigen:
- Fig. 1: einen Querschnitt der Verbindungsfläche eines Grundkörpers mit einer Gleitsohle, und
- Fig. 2: einen vergrößerten Ausschnitt einer Verbindungsfläche.

Einander entsprechende Teile sind in allen Figuren mit denselben Bezugszeichen versehen.

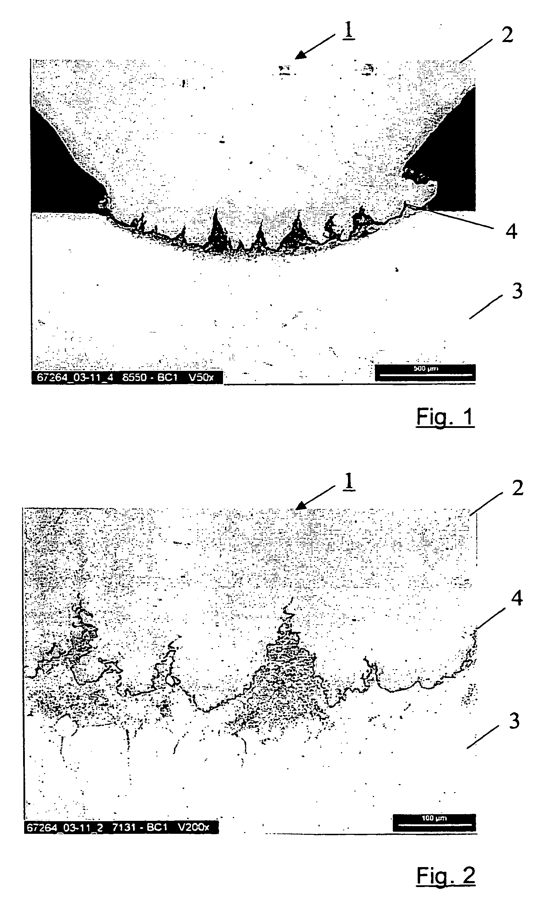

Fig. 1 zeigt einen Querschnitt einer sich durch Kondensatorentladungsschweißen ausbildenden Verbindungsfläche 4 eines Grundkörpers 3 mit einer Gleitsohle 2 eines Gleitschuhs 1. Die Gefügestruktur ist an der Verbindungsfläche 4 zwischen der Lauffläche aus der vorgeschlagenen Zinnbronze und dem Grundkörper aus Stahl durch einen geringen Wärmeeintrag des Herstellungsverfahrens nahezu nicht gestört. Eine lokal eng begrenzte Wärmeeinflusszone bildet sich lediglich im Bereich weniger Mikrometer aus. Die umgebende Matrix bleibt unbeeinflusst und es kommt zu keinem Härteabfall im Material. In diesem Beispiel war die Fügefläche der Gleitsohle 2 konstruktiv derart ausgelegt, dass im Berührungsbereich ein "Buckel" die Kontaktfläche auf ein Minimum reduziert. Der Fügevorgang war bereits abgebrochen, bevor beide Fügeflächen komplett aufeinander trafen. Dadurch entsteht der Hohlraum zwischen den Fügeteilen, der übermäßige Schmelze aufnehmen kann.

Fig. 2 zeigt einen vergrößerten Ausschnitt einer Verbindungsfläche 4 eines Gleitschuhs 1. Die Methode des Kondensatorentladungsschweißens führt zu einer intensiven Verzahnung der Verbindungsfläche 4 von Gleitsohle 2 und Grundkörper 3 unter lokaler Wärmeeinwirkung. Im Schliff erkennt man im Fügebereich keine Risse oder Poren.

### Bezugszeichenliste

- 1: Gleitkörper, Gleitschuh
- 2: Gleitsohle
- 3: Grundkörper
- 4: Verbindungsfläche

## Patentansprüche

1. Gleitkörper (1), bestehend aus einem Grundkörper (3) und einer an dem Grundkörper (3) augeschweißten Gleitsohle (2) mit einer Lauffläche, **dadurch gekennzeichnet,**
- **dass** die Gleitsohle (2) mit der Lauffläche aus einem Gleitlagerwerkstoff aus einer Kupfer-Zinn-Titanlegierung aus 13,5 bis 17 Gew.-% Zinn, 0,1 bis 0,3 Gew.-% Titan, Rest Kupfer und
wahlweise aus einem oder mehreren der Elemente aus der Gruppe Silicium, Chrom und Zirkon bis zu einem Gesamtgehalt von 1,0 Gew.-% und unvermeidbaren Verunreinigungen besteht und,
- **dass** die Gleitsohle (2) und der Grundkörper (3) nur lokal mittels Kondensatorentladungsschweißen miteinander verbunden sind.

2. Gleitkörper nach Anspruch 1, **dadurch gekennzeichnet, dass** die Gleitsohle (2) mit dem Grundkörper (3) über einen äußeren Ringbuckel und/oder einem mittig angeordneten Ringbuckel miteinander verbunden sind.

3. Gleitkörper nach Anspruch 1 oder 2, **dadurch gekennzeichnet, dass** die Lauffläche ein gerichtetes zweiphasiges Gefüge aus der Kupfer-Zinn-Titanlegierung aufweist.

4. Gleitkörper nach einem der Ansprüche 1 bis 3, **dadurch gekennzeichnet, dass** der Grundkörper (3) aus einer Stahllegierung besteht.

5. Verwendung eines Gleitkörpers nach einem der Ansprüche 1 bis 4 als Gleitschuh für hydrostatische Kolbenmaschinen.

## Claims

1. Sliding body (1) comprising a base body (3) and a sliding base (2) which is welded to the base body (3) and which has a running surface, **characterised in that**
- the sliding base (2) having the sliding surface comprises a sliding bearing material composed of a copper/tin/titanium alloy comprising from 13.5 to 17% by weight of tin, from 0.1 to 0.3% by weight of titanium and the balance being copper, and
optionally one or more of the elements from the group constituted by silicon, chromium and zirconium up to a total content of 1.0% by weight and unavoidable impurities and
- **in that** the sliding base (2) and the base body (3) are connected to each other only locally by means of condenser discharge welding.

2. Sliding body according to claim 1, **characterised in that** the sliding base (2) and the base body (3) are connected to each other by means of an outer annular projection and/or a centrally arranged annular projection.

3. Sliding body according to claim 1 or claim 2, **characterised in that** the sliding surface has a directed two-phase structure comprising the copper/tin/titanium alloy.

4. Sliding body according to any one of claims 1 to 3, **characterised in that** the base body (3) comprises a steel alloy.

5. Use of a sliding body according to any one of claims 1 to 4 as a sliding block for hydrostatic piston machines.

## Revendications

1. Corps coulissant (1) consistant en un corps de base (3) et une base coulissante (2) soudée au corps de base (3) avec une surface de roulement, **caractérisé en ce que**
- la base coulissante (2) avec la surface de roulement consiste en un matériau pour palier coulissant en un alliage cuivre-étain-titane de 13,5 à 17 % en poids d'étain, 0,1 à 0,3 % de titane, le reste de cuivre et au choix en un ou plusieurs des éléments du groupe silicium, chrome et zirconium jusqu'à une teneur totale de 1,0 % en poids et des impuretés inévitables, et
- la base coulissante (2) et le corps de base (3) ne sont liés entre eux que localement par soudage par décharge de condensateur.

2. Corps coulissant selon la revendication 1, **caractérisé en ce que** la base coulissante (2) est liée avec le corps de base (3) par le biais d'un bossage annulaire externe et/ou d'un bossage annulaire disposé de manière centrale.

3. Corps coulissant selon la revendication 1 ou 2, **caractérisé en ce que** la surface de roulement comporte une structure à deux phases dirigée en l'alliage cuivre-étain-titane.

4. Corps coulissant selon l'une des revendications 1 à 3, **caractérisé en ce que** le corps de base (3) consiste en un alliage d'acier.

5. Utilisation d'un corps coulissant selon l'une des revendications 1 à 4 comme patin coulissant pour machines à piston hydrostatiques.
